# EUROPEAN PATENT APPLICATION

(11) **EP 0 982 692 A2**
(43) Date of publication of application: **01.03.2000**
(21) Application number: 99115810.6
(22) Date of filing: 11.08.1999
(51) Int. Cl.: G07F 7/10, G06K 19/07, G06K 7/06

(54) **Expanded smart card communication architecture and procedure for communicating between smart card application and data carrier**

(30) Priority: 26.08.1998 DE 19838628
(71) Applicant: International Business Machines Corporation, Armonk, NY 10504 (US)
(72) Inventor: Hamann, Ernst-Michael, 71034 Böblingen (DE); Schäck, Thomas, 77855 Achern (DE); Sulzmann, Robert, 71088 Holzgerlingen (DE)
(74) Representative: Teufel, Fritz, Dipl.-Phys.

(57) **Abstract**

The present invention describes an improved communication architecture for smart card systems and an improved procedure for communication of the smart card applications using protected data carriers, particularly in the case where smart cards or smart card readers cannot be used. The improved communication architecture has a common virtual smart card interface between the respective smart card applications and the modules which facilitate access to the protected data carriers (smart cards). The modules allow access to either physical smart cards, virtual software smart cards or hardware smart cards. The common virtual smart card interface means that the application is completely independent of the respective module or the respective data carrier. Alternatively, the improved communication architecture additionally contains a virtual smart card adapter which communicates over the common virtual smart card interface with the respective smart card application. The different modules are attached to the smart card adapters and selected statically or dynamically over the smart card application. Virtual software smart cards which functionally imitate true physical smart cards can be linked over the virtual smart card adapter to communicate with a smart card application. This procedure is then particularly suited for when the smart card is lost or defective, the smart card reader cannot function, or for testing new smart card technologies.

## Description

The present invention describes an expanded smart card architecture for communicating between the smart card application and a data carrier, particularly in the case where the smart card or the smart card reader, for whatever reason, is not present or cannot be used.

With the introduction of new technology and programs which necessitate the use of smart cards, the problem of short term availability of smart card readers often arises. Workstations for users must be converted to new smart card readers which conform to this technology. This is often very laborious from a technical point of view and, particularly in large companies, takes a great deal of time. The result of this is that new technologies or programs have to be operated together with old technologies and programs in a transitional phase. This is both cost and labour intensive.

Defective smart card readers prevent transactions using the smart card. This can be economically disadvantageous both for the smart card owner as well as for the operator of the smart card reader, depending on the field of use.

In the case of a smart card being lost, the owner is prevented from working with the smart card until a new card is issued. In certain cases, e.g. during long trips away, this can lead to problems for the owner. This is increasingly the case because many business activities are extensively carried out using smart cards.

It is therefore the task of the present invention to produce a procedure and system which is able to avoid the above mentioned disadvantages.

The task is solved by the features of claims 1, 20 and 30. Additional advantageous embodiments are presented in the sub-claims.

The advantages of the present invention are that a virtual software smart card can be used instead of a physical smart card. The virtual software smart card represents a pure software solution and is modelled on the functions of a physical smart card. The testing of new smart card solutions is limited to the testing of the virtual software smart card. The creation of a virtual software smart card, based on a new smart card solution, is less time consuming and thus also cheaper than creating a smart card. Laborious smart card prototypes for testing the newly developed smart cards thus become unnecessary. In the case of loss of the physical smart card, the person entitled to do so can download a virtual software smart card using a diskette or over the Net into his system and continue to work using this virtual software smart card until a new smart card is issued.

Organisations and companies can use new smart card technology by making available virtual software smart cards, without all the systems having to be equipped already with new smart card readers. For smart card manufacturers, the advantage is that new technologies can be tested in the later application environment before components (such as crypto-coprocessors, large memories, etc.) are available.

By introducing a common virtual smart card interface and a virtual smart card adapter, communication between the smart card application and the modules of the virtual smart card adapter is completely independent. For the smart card application, it makes no difference with which module of the virtual smart card adapter it is communicating. Modules are access routines on a physical smart card, a virtual software smart card or a hardware smart card with the functionality of a smart card. Changes and amendments in the modules or the virtual smart card adapter do not require any adaptation of the respective smart card application due to the common virtual smart card interface.

The present invention will be explained in more detail using a preferred embodiment example and figures where:
Fig. 1 shows a communication architecture between smart card applications and smart cards or smart card modules
Fig. 2 shows the communication architecture in accordance with the invention between different smart card applications and different data carriers.

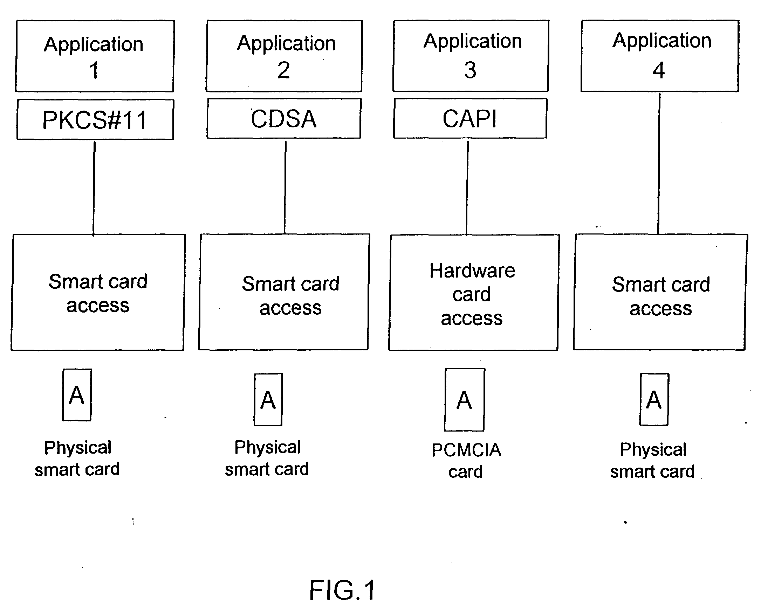

Fig. 1 describes a communication architecture between different smart card applications and different smart cards. The identification of the card is carried out by the application. The different applications communicate with specific smart card access routines over special interfaces (PKCS#11, CDSA, CAPI). The respective smart card access routines are either a part of the respective application or form a separate software component. For different smart cards with different operating systems or different data structures, they have their own access routines. Each new smart card or changes to the operating system software or data structure of a smart card requires an adaptation of the respective access functions.

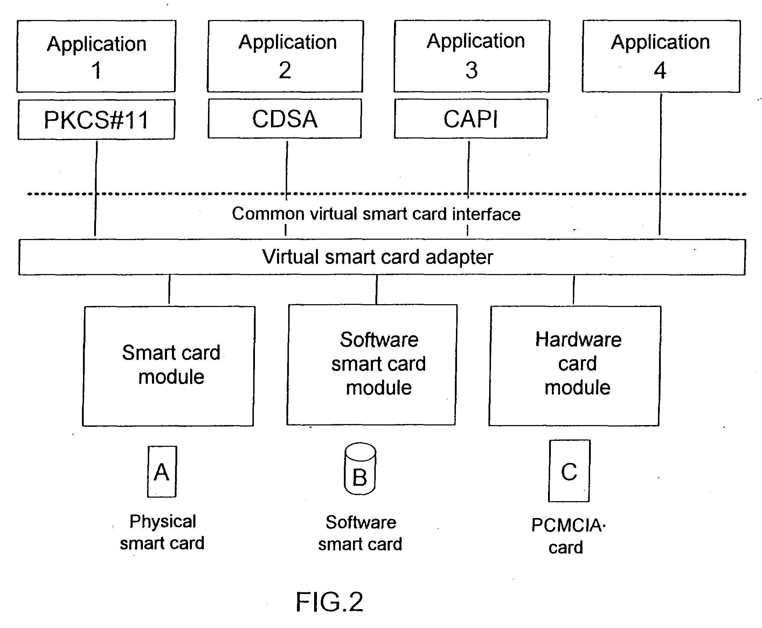

Fig. 2 describes the communication architecture in accordance with the invention between different smart card applications and different data carriers. Different applications communicate over a common virtual smart card interface (VCS) with the respective modules. Applications 1 and 2, for example, touch on a standardized interface such as PKCS #11 and application 3 touches on a standardized interface such as CAPI. The implementation of different standard interfaces (PKCS #11, CDSA, CAPI) uses the common virtual smart card interface. Application 4 touches directly on the common virtual smart card interface. Preferably, a virtual smart card adapter (VCS adapter) is arranged below the common virtual interface.

The VCS adapter is a software module and offers a uniform interface for all applications. Different modules (smart card modules, software smart card modules, hardware card modules) can be attached to the VCS adapter. The applications can interrogate the accessible modules over the VCS adapter. The application can communicate with a selected module over the VCS adapter. The selection of the respective module can be carried out statically or dynamically. In the case of dynamic linking of a module, over the Net for example, the VCS adapter checks the identity and authenticity of the module, i.e. whether the module has been created by an authorized entity and has not been modified in the meantime. The module receives a digital signature which is tested by the VCS adapter on creating the communication. The VCS, too, can also be connected statically or dynamically to the application. In the case of dynamic connections, the smart card application checks the identity and authenticity of the VCS adapter. Therefore, even the application can be linked dynamically to the VCS adapter over the Net.

Also, in this case the identity and authenticity of smart card applications must be checked. The check here on authenticity is also carried out using a digital signature.

Alternatively, the smart card application, the VCS adapter and also the modules attached to it can be linked statically. In this case, a digital signature is unnecessary.

Modules are the access routines to the data objects; the data objects can, for example, be stored in a physical or a virtual smart card or on a hardware smart card. Cryptographic functions are filed either in the module or on a physical smart card or a hardware smart card (e.g. PCM/CIA card) . In the case of a virtual software smart card, the cryptographic functions are a part of the virtual software smart card.

Access to private data on a physical smart card or hardware smart card is protected by a password (e.g. PIN).

With the virtual software smart cards, private data is additionally encoded with the support of the password. The codes of the virtual software smart cards are additionally protected, particularly against being read out.

Several standardized virtual software smart card types can be developed and stored on a storage medium; the virtual software smart cards can also be distributed over the Internet to users. Virtual software smart cards have a generic structure and do not contain any user-specific data. They simply represent the method of functioning of a physical smart card. Therefore, they need to be initialized/personalized by the user. The initialization of the virtual software smart card preferably precedes an authentication procedure which establishes whether changes have been made in the virtual software smart card in the transmission of the virtual software smart card from one system to the other. The virtual software smart card is preferably equipped with a user interface for initializing the virtual smart card. The user interface asks the user, for example, which virtual software smart card type is required. Smart card types cover, for example, signature cards, access cards or data cards. The user interface asks the user to determine a password or to accept or change an existing password. The virtual software smart card generates a code from the password. From the information requested, a memory area is established on the hard disk of the user for storing public data objects and a memory area for storing private data objects. This is carried out by functions of the virtual software smart card. Components of the virtual software smart card are the access routines on the data objects which are stored on the hard disk. The public data objects are freely accessible; private data objects can only be accessed using a code/password. The user is able to work using the virtual software smart card.

The VCS adapter can be a component of the virtual smart card or can represent its own software component which is made available together with the virtual software smart card.

## Claims

1. Communication architecture for the exchange of information between a smart card application and a protected data carrier containing at least the following components:
a) a smart card application
b) a virtual smart card adapter with a common interface to all smart card applications for linking in modules for access to protected data carriers
c) a module with access routines to a protected data carrier
d) a data carrier with private and public data objects where the private data can be protected against access.

2. Communication architecture in accordance with claim 1, characterised in that the module is able to be connected statically to the smart card adapter.

3. Communication architecture in accordance with claim 1, characterised in that the module is able to be connected dynamically to the smart card adapter.

4. Communication architecture in accordance with claim 3, characterised in that the module is able to be connected dynamically with the smart card adapter over the Net.

5. Communication architecture in accordance with claims 3 or 4, characterised in that the module which can be selected dynamically is able to have its identity and/or authenticity checked by the smart card adapter.

6. Communication architecture in accordance with claims 3 to 5, characterised in that the authenticity of the module is able to be checked by a digital signature.

7. Communication architecture in accordance with claims 1 to 6, characterised in that the smart card adapter is able to be connected statically with the smart card application.

8. Communication-architecture in accordance with claims 1 to 6, characterised in that the smart card adapter is able to be connected dynamically to the smart card application.

9. Communication architecture in accordance with claim 8, characterised in that the smart card adapter is able to be connected dynamically over the Net to the smart card application.

10. Communication architecture in accordance with claims 8 and 9, charactersied in that the smart card adapter which can be connected dynamically is able to have its identity and/or authenticity checked by the smart card application.

11. Communication architecture in accordance with claims 8 to 10, characterised in that the authenticity of the smart card adapter is able to be checked using a digital signature.

12. Communication architecture in accordance with claims 1 to 11, characterised in that the modules, which are able to be connected to the smart card adapter over the smart card application program, are able to be interrogated, selected and connected.

13. Communication architecture in accordance with claims 1 to 12, characterised in that the protected data carrier is a physical smart card, a virtual software smart card or a hardware smart card with the functionality of a smart card.

14. Communication architecture in accordance with claims 1 to 13, characterised in that the virtual software smart card is able to be connected dynamically or statically to the respective module.

15. Communication architecture in accordance with claims 1 to 14, characterised in that the identity and/or authenticity of the virtual software smart card is able to be checked by the module.

16. Communication architecture in accordance with claims 14 to 15, characterised in that the test of authenticity of the virtual software smart card which can be connected dynamically is carried out using a digital signature.

17. Communication architecture in accordance with claims 1 to 16, characterised in that the virtual software smart card is able to be initialized and personalized.

18. Communication architecture in accordance with claims 1 to 17, characterised in that data objects are able to be filed on the data carrier through functions of the virtual software smart card and access to the data objects by the module are able to be created using functions of the virtual smart card.

19. Communication architecture in accordance with claims 1 to 18, characterised in that cryptographic functions for coding and encoding data are part of the virtual software smart card.

20. Communication architecture for the exchange of information between a smart card application and a protected data carrier containing at least the following components:
a) a smart card application
b) a module with access routines to a protected data carrier
c) a virtual software smart card with cryptographic functions for filing, reading and writing data objects on a data carrier
d) a data carrier on which data objects with private and public data can be stored, whereby private data can be protected against access using the virtual software smart card.

21. Communication architecture in accordance with claim 20, characterised in that the module is able to be connected statically or dynamically to the smart card application.

22. Communication architecture in accordance with claim 21, characterised in that in the case of dynamic connection of the module with the smart card application, its identity and/or authenticity is able to be checked using a digital signature.

23. Communication architecture in accordance with claims 20 to 21, characterised in that the virtual software smart card is able to be connected statically or dynamically to the module.

24. Communication architecture in accordance with claim 23, characterised in that in the case of dynamic connection of the virtual software smart card to the module, its identity and/or authenticity is able to be checked using a digital signature.

25. Communication architecture in accordance with claims 20 to 24, characterised in that a virtual smart card adapter with an interface common to all smart card applications for linking modules for access to protected data carriers is additionally able to integrated.

26. Communication architecture in accordance with claim 25, characterised in that the smart card adapter is able to be connected dynamically to the smart card application.

27. Communication architecture in accordance with claim 26, characterised in that the smart card adapter is able to be connected dynamically over the Net to the smart card application.

28. Communication architecture in accordance with claims 25 and 26, characterised in that the smart card adapter which can be connected dynamically is able to have its identity and/or authenticity checked by the smart card application.

29. Communication architecture in accordance with claims 25 to 28, characterised in that the modules which can be connected to the smart card adapters are able to be interrogated, selected and connected over the smart card application program.

30. Procedure for implementing virtual software smart cards where the software smart cards functionally imitate physical smart cards, characterised by the following steps:
a) the offering of a user-interface for the selection of types of virtual software smart cards which are filed on a storage medium
b) the selection of a virtual software smart card in accordance with step a) by the user
c) the personalizing of the virtual software smart card by the user entering a password
d) the generation of private and public data objects on a storage medium using software smart card functions
e) the availability of access functions to the data objects using software smart card functions where private data objects are protected from unauthorized access.
